# EUROPÄISCHE PATENTSCHRIFT

(11) **EP 0 505 347 B1**
(45) Veröffentlichungstag und Bekanntmachung des Hinweises auf die Patenterteilung: **24.05.1995**
(21) Anmeldenummer: 92890054.7
(22) Anmeldetag: 11.03.1992
(51) Int. Cl.: B01D 53/70

(54) **Verfahren zur Abscheidung von polychlorierten Dioxinen und Furanen aus Gasen**
Process for separating polychlorinated dioxins and furans from gases
Procédé pour éliminer des dioxines et furanes polychlorés des courants gazeux

(30) Priorität: 21.03.1991 AT 632/91
(43) Veröffentlichungstag der Anmeldung: 23.09.1992
(73) Patentinhaber: AUSTRIAN ENERGY & ENVIRONMENT SGP/WAAGNER-BIRO GmbH, A-1210 Wien (AT)
(72) Erfinder: Kahr, Gerhard, Dr. Dipl.-Ing., A-2542 Kottingbrunn (AT); Habitzl, Erich, Dipl.-Ing., A-2000 Stockerau (AT)
(74) Vertreter: Wallner, Gerhard, Dipl.-Ing.

(56) Entgegenhaltungen:
- DE-A- 3 136 646
- DE-A- 3 628 403
- DE-A- 4 018 408
- US-A- 4 502 396
- US-A- 4 844 875

## Beschreibung

Die Erfindung betrifft eine Verfahren zur Abscheidung von polychlorierten Dioxinen und Furanen aus Gasen bei kleinen bis mittleren und/oder batch-betriebenen Anlagen, sowie eine Anlage zur Durchführung des Verfahrens.

Die derzeit verwendeten Systeme zur Entfernung von polychlorierten Dioxinen und Furanen von Gasen, insbesondere von Rauchgasen, benötigen für ihren störungsfreien Betrieb staubfreies Gas und setzen umfangreiche Sicherheitsvorkehrungen bzw. Anlagen zur Voraufbereitung des zu reinigenden Gases voraus. Insbesondere die Sicherheitsvorkehrungen stellen Fixkosten dar, welche unabhängig von der Anlagengröße anfallen und bewirken bei kleinen und mittleren Anlagen hohe spezifische Kosten, bezogen auf die entsorgte Gasmenge. Dieser wirtschaftliche Nachteil tritt bei batchbetriebenen Anlagen noch stärker zutage, da die angesprochenen Hilfsanlagen am Anfang bzw. am Ende eines jeden Einsatzes der Anlage an- bzw. abgefahren werden müssen.

Reinigungssysteme, welche Akoks-Filter verwenden, d.h. Filter auf der Basis von Aktivkohle, werden bei Temperaturen um 80°C betrieben, wobei wegen der Entzündungsgefahr umfangreiche Uberwachungs- und Sicherheitseinrichtungen notwendig sind. Andererseits arbeiten die ebenfalls verwendeten Oxidationskatalysatoren bei Temperaturen um 280°C, was meist eine Anlage zur Aufheizung des Gases voraussetzt, und bedürfen weitere Zusatzanlagen zur Herstellung des für den Betrieb notwendigen gleichmäßigen staubfreien Gasstromes. Auch Rauchgasreinigungssysteme, bestehend aus einem Sprühtrockner und einem nachgeschalteten Elektrofilter zeigen sehr gute Abscheideergebnisse, sind im Betrieb störanfällig, sodaß eine zuverlässige Dioxinabscheidung nicht garantiert werden kann. Daher sind diese Systeme für die Zielgruppe der vorliegenden Erfindung ebenfalls nicht wirtschaftlich.

Auf dem Gebiet der Abscheidung von Dioxinen ist es bekannt, daß durch Minderung der Rauchgastemperatur in ebenfalls üblichen Schlauchfiltern eine Senkung der Dioxinemission eintritt, d.h. die Abscheideleistung ist dadurch verbessert.

Die Minderung der Rauchgastemperatur ist jedoch bei etwa 120°C limitiert, da hier meist der Taupunkt des Rauchgases erreicht wird, die Staubabscheidung jedoch trocken erfolgen muß. Auch bei einem Verfahren zum Messen von Feststoffen in Abgasen gemäß der DE-A-31 36 646 wird das Prinzip des Verdünnens und Kühlens von Rauchgas mit gefiltertem und feststofffreiem Kühlgas beschrieben. Bei dem zuletzt beschriebenen Verfahren handelt es sich jedoch um ein Meßverfahren, bei welchem kleine Proben, d.h. kleine Gasvolumen aus einem Abgasstrom entnommen und in einer komplizierten Apparatur unter Verwendung von beispielsweise Durchflußmessern und Gaszählern für das Probegasvolumen bzw. das Kühlgas analysiert.

Die Aufgabe der vorliegenden Erfindung ist daher ein Verfahren sowie eine Vorrichtung, welche speziell für die Abscheidung von Dioxinen und Furanen bei kleinen bis mittleren und/oder batch-betriebenen Anlagen bestimmt ist, anzugeben, welche auf möglichst einfache und wirtschaftliche Weise arbeiten, bei welchen kein fester oder flüssiger Sondermüll entsteht, und wobei vorteilhafterweise gebräuchliche Anlagenteile, beispielsweise Filter, verwendet werden können.

Zur Lösung dieser Aufgabe ist erfindungsgemäß vorgesehen, daß das gesamte Gas einer Mischkammer zugeleitet wird, in welcher das Gas in an sich bekannter Weise mit einem Kühlgas gemischt und dadurch auf 30 bis 60°C abgekühlt wird und das gekühlte Gasgemisch einem paraffinimprägnierten Staubfilter zugeleitet wird, in dem die Dioxine und Furane aus dem gekühlten Gasgemisch abgeschieden werden.

Dadurch wird gewährleistet, daß die Temperatur des zu reinigenden Gases dermaßen abgesenkt wird, daß ein nachgeschaltetes paraffinimprägniertes Staubfilter die im Gas enthaltenen Dioxine und Furane ausfiltern kann, und dabei keine Kondensation des Dampfes erfolgt. Die Filterelemente der herkömmlich verwendeten Staubfilter können einer Verbrennungs- oder Pyrolyseanlage zugeführt werden, um die daran angelagerten Schadstoffe thermisch zu zerstören und somit die Entstehung festen oder flüssigen Sondermülls zu verhindern. Das erfindungsgemäße Verfahren bedarf keiner langen Anlauf- oder Abklingzeiten, sodaß es auch bei kleinen bzw. batch-betriebenen Anlagen sinnvoll einsetzbar ist.

Um aufwendige Sicherheitsvorkehrungen zu vermeiden und gleichzeitig die Abscheideleistung zu optimieren ist vorgesehen, daß die Temperatur des Gasgemisches auf 30 bis 60°C und vorzugsweise seine relative Feuchte auf maximal 80% eingestellt wird.

Zur Durchführung des erfindungsgemäßen Verfahrens ist vorteilhafterweise eine Anlage vorgesehen, welche gekennzeichnet ist durch eine Mischkammer in der Gasleitung, eine Einrichtung zur Zumischung eines Kühlgases und einen paraffinimprägnierten Staubfilter, in welchem sich die Dioxine und Furane aus dem gekühlten Gasgemisch anlagern.

Diese Anlage hat den Vorteil, daß sie einfach aufgebaut ist und daher keiner großen Umrüstungen der auszustattenden Anlagen bedarf, und daß zum Großteil herkömmlich verwendete Einzelelemente Verwendung finden können.

Um die Abscheidung sowohl der an Staubpartikeln adsorbierten als auch der noch gasförmig vorliegenden Schadstoffe zu gewährleisten, ist ein mit Paraffin imprägniertes Staubfilter mit grober Oberfläche, vorzugsweise ein Papierfaltenfilter, vorgesehen, wodurch die abscheidewirksame Oberfläche erhöht und vorzugsweise das lipophile Dioxin im Paraffin absorbiert wird.

Ein Ausführungsbeispiel der Erfindung soll anhand einer schematischen Darstellung einer erfindungsgemäßen Anlage zur Rauchgas-Reinigung beispielhaft näher erläutert werden.

Das Rauchgas wird über eine Leitung 1 einer Mischkammer 2 zugeführt. In der Rauchgaszuleitung 1 ist auch ein Temperaturmeßsensor 3 zur Ermittlung der Temperatur des Rauchgases vorgesehen. Eine Leitung 4 dient zur Zuführung von Kühlgas in die Mischkammer 2. Vorzugsweise wird Luft als Kühlgas verwendet. Zur Luftzuführung ist ein regelbares Gebläse 5 vorgesehen, um die zugeführte Luftmenge dem Bedarf anzupassen, welcher aus der gewünschten Temperaturerniedrigung bzw. dem gewünschten Mischungsverhältnis zwischen Rauchgas und Luft bestimmt wird. In einer Verbindungsleitung 6, durch welche das Gasgemisch in den Filter 7 gelangt, ist ebenfalls ein Temperatursensor 8 vorgesehen, mit welchem überwacht wird, ob das Gasgemisch auch die für den optimalen Betrieb des Filters 7 erforderliche Temperatur aufweist. Nach dem Filter 7 ist ein regelbares Gebläse 9 angeordnet, durch welches das Gasgemisch durch den Filter 7 gesaugt und anschließend weiter abgegeben wird.

Vorteilhafterweise kann in der Zufuhrleitung 4 für die Kühlluft ein Wärmetauscher 10 vorgesehen sein, falls durch einen Temperatursensor 11 festgestellt wird, daß die Kühlluft eine zu hohe Temperatur aufweist, um die gewünschte Temperaturabsenkung des Rauchgases erzielen zu können. Bei dieser Ausführungsform ist vorzugsweise nach dem Wärmetauscher 10 ein weiterer Temperatursensor 12 in der Leitung 4 vorhanden, um sicher festzustellen, ob die gewünschte Lufttemperatur durch den Wärmetauscher 10 erhalten wurde.

Vorteilhafterweise sind in der Zufuhrleitung 4 für die Kühlluft noch ein Drucksensor 13 sowie ein Durchflußmesser 14 vorgesehen.

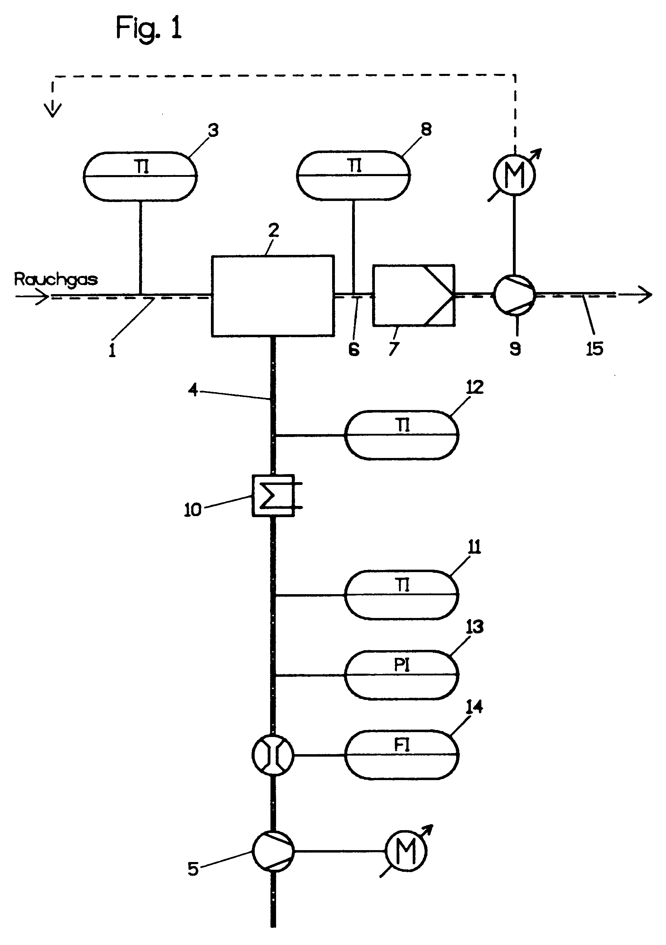

Das regelbare Gebläse 9, welches das Gasgemisch durch den Filter 7 ansaugt und über eine Leitung 15 entweder direkt an die Umgebung oder an nachgeschaltete zusätzliche Aufbereitungsanlagen abgibt, kann vorteilhafterweise mit einem Sensor an der Zufuhrleitung 1 für das Rauchgas verbunden sein. Dies ist durch die strichlierte Linie in der Abbildung symbolisiert. Dadurch kann auch bei wechselndem Druck bzw.

Strömungsverhältnissen des zu reinigenden Rauchgases die Leistung des Gebläses 9 derart geregelt werden, daß in der Mischkammer 2 bzw. im Filter 7 relativ gleichmäßige Strömungsverhältnisse herrschen. Dies ist wiederum für die Abscheideleistung des Filters 7 von Vorteil.

Die Überwachung des Temperatur- bzw. Druckwertes als auch deren Regelung wird vorzugsweise von einem automatischen Prozeßleitsystem, speziell mikroprozessorengesteuert, übernommen.

### Anwendungsbeispiel 1: Spitalmüllpyrolyse

Das aus der Pyrolyseanlage kommende Rauchgas ist mit Wasser gesättigt, während Schwefeldioxid und Salzsäure bereits in einer Waschanlage abgeschieden wurden. Das Rauchgas hat einen Staubgehalt von maximal 100 mg/m³ und die Dioxinemissionen sind größer als 0.1 ng/m³. Zur Dioxinabscheidung wird das Rauchgas in einer Mischkammer mit Luft verdünnt und gekühlt, wobei die Rauchgastemperatur und die Temperatur im Staubfilter sowie die zuzuführende Luftmenge in Sekundentakt gemessen bzw. nachgeregelt wird. In der Mischkammer wird die Zuluft normal zum Rauchgas eingedüst und anschließend wird mittels Leitblechen eine vollständige Durchmischung herbeigeführt.

Im als Papierfaltenfilter ausgelegten Staubfilter wird der Staub vollständig abgeschieden und in der Gasphase befindliches polychloriertes Dioxin bzw. Furan am Papier adsorbiert.

Das Papierfaltenfilter stellt gleichzeitig ein Sicherheitsfilter zur Abscheidung von Feinstaub und durchbrechenden Rußpartikeln dar.

Die Elemente des Papierfaltenfilters werden in regelmäßigen Abständen vorzugsweise abhängig von der Staubbeladung des Rauchgases und der Dioxinemission durch Rückführung in die Pyrolyseanlage entsorgt. Das an den Elementen adsorbierte Dioxin wird dabei zu 99% zerstört, der entweichende Rest wird wiederum im Faltenfilter adsorbiert.

## Patentansprüche

1. Verfahren zur Abscheidung von polychlorierten Dioxinen und Furanen aus Gasen bei kleinen bis mittleren und/oder batch-betriebenen Anlagen, dadurch gekennzeichnet, daß das gesamte Gas einer Mischkammer zugeleitet wird, in welcher das Gas in an sich bekannter Weise mit einem Kühlgas gemischt und dadurch auf 30 bis 60°C abgekühlt wird, und das gekühlte Gasgemisch einem paraffinimprägnierten Staubfilter zugeleitet wird, in dem die Dioxine und Furane aus dem gekühlten Gasgemisch abgeschieden werden.

2. Verfahren gemäß Anspruch 1, dadurch gekennzeichnet, daß die relative Feuchte des Gasgemisches auf maximal 80% eingestellt wird.

3. Verfahren gemäß Anspruch 1, dadurch gekennzeichnet, daß die Staubfilter-Elemente nach einer bestimmten Einsatzzeit zur Zerstörung der abgeschiedenen Dioxine und Furane einer Verbrennungs- bzw. Pyrolyseanlage zugeführt werden.

4. Anlage zur Abscheidung von polychlorierten Dioxinen und Furanen aus Gasen bei kleinen bis mittleren und/oder batch-betriebenen Anlagen, gekennzeichnet durch eine Mischkammer in der Gasleitung, eine Einrichtung (5) zur Zumischung eines Kühlgases und einen Staubfilter (7), in welchem sich die Dioxine und Furane aus dem gekühlten Gasgemisch an den paraffinimprägnierten Filterteilen anlagern.

5. Anlage gemäß Anspruch 4, dadurch gekennzeichnet, daß die Zufuhrleitung (4) für das Kühlgas im wesentlichen senkrecht zur Richtung der Gasströmung in die Gasleitung (1) einmündet.

6. Anlage gemäß Anspruch 4, dadurch gekennzeichnet, daß der Staubfilter (7) ein Faltenfilter, vorzugsweise ein Papierfaltenfilter ist.

## Claims

1. Process for separating polychlorinated dioxins and furans from gases in small to medium and/or batch-operated installations, characterized in that the whole gas is supplied to a mixing chamber in which the gas is mixed in a manner known per se with a cooling gas and thereby cooled down to 30 to 60°C and that the cooled gas mix is fed to a paraffin impregnated dust filter in which the dioxins and furans are separated from the cooled gas mix.

2. Process according to claim 1, characterized in that the relative humidity of the gas mix is adjusted to maximum 80%.

3. Process according to claim 1, characterized in that the elements of the dust filter are fed after a predetermined dwell time to a combustion or pyrolysis installation to destroy the separated dioxins and furans.

4. Installation for separating polychlorinated dioxins and furans from gases in small to medium sized and/or batch-operated installations, characterized by a mixing chamber in the gas conduit, means (5) for mixing a cooling gas into the gas and a dust filter (7) in which the dioxins and furans from the cooled gas mix settle down on the paraffin impregnated filter elements.

5. Installation according to claim 4, characterized in that the feed duct (4) for the cooling gas discharges substantially perpendicularly to the direction of the gas stream into the gas duct (1).

6. Installation according to claim 4, characterized in that the dust filter (7) is a folded filter, preferably a paper folded filter.

## Revendications

1. Procédé pour séparer des dioxines et furanes polychlorés de gaz dans des installations d'une grandeur petite à moyenne et/ou opérées de façon discontinue, caractérisé en ce que la totalité du gaz est alimentée vers une chambre de mélange dans laquelle le gaz est mélangé de façon connue avec un gaz de refroidissement et est ainsi refroidi à 30 jusqu'à 60°C et que le mélange de gaz refroidi est alimenté vers un filtre dépoussiéreur imprégné de paraffine dans lequel les dioxines et furanes sont séparés du mélange de gaz refroidi.

2. Procédé selon la revendication 1, caractérisé en ce que l'humidité relative du mélange de gaz est ajustée à un maximum de 80%.

3. Procédé selon la revendication 1, caractérisé en ce que les éléments du filtre dépoussiéreur sont alimentés après un temps de service prédéterminé dans une installation d'incinération ou de pyrolyse pour détruire les dioxines et furanes séparés.

4. Installation pour séparer des dioxines et furanes polychlorés de gaz dans des installations d'une grandeur petite à moyenne et/ou opérées de façon discontinue, caractérisée par une chambre de mélange dans la conduite de gaz, un dispositif (5) pour mélanger un gaz de refroidissement au gaz et un filtre dépoussiérieur (7) dans lequel les dioxines et furanes du mélange de gaz refroidi se déposent sur des éléments de filtre imprégnés de paraffine.

5. Installation selon la revendication 4, caractérisée en ce que la conduite d'alimentation (4) du gaz de refroidissement débouche substantiellement perpendiculairement à la direction de flux de gaz dans la conduite de gaz (1).

6. Installation selon la revendication 4, caractérisée en ce que le filtre dépoussiérieur (7) est un filtre à plis, de préférence un filtre à plis en papier.
